Europäisches Patentamt

European Patent Office

Office européen des brevets

(19)

(11) **EP 1 684 012 A1**

(12) **DEMANDE DE BREVET EUROPEEN**

(43) Date de publication:
   **26.07.2006 Bulletin 2006/30**

(51) Int Cl.:
   **F23D 11/10** *(2006.01)*

(21) Numéro de dépôt: **05301097.1**

(22) Date de dépôt: **22.12.2005**

(84) Etats contractants désignés:
   **AT BE BG CH CY CZ DE DK EE ES FI FR GB GR HU IE IS IT LI LT LU LV MC NL PL PT RO SE SI SK TR**
   Etats d'extension désignés:
   **AL BA HR MK YU**

(30) Priorité: **31.12.2004 FR 0453285**

(71) Demandeur: **L'AIR LIQUIDE S.A.**
   **75321 Paris Cédex 07 (FR)**

(72) Inventeurs:
   • **Tromeur, Pascal**
      **45520, Cercottes (FR)**

   • **Tsiava, Rémi**
      **91250, Saint Germain les Corbeil (FR)**
   • **Leroux, Bertrand**
      **92130, Issy les moulineaux (FR)**
   • **Recourt , Patrick**
      **91460, Marcoussis (FR)**

(74) Mandataire: **Ducreux, Marie et al**
   **L'Air Liquide,**
   **Service Propriété Industrielle,**
   **75 Quai d'Orsay**
   **75321 Paris cedex 07 (FR)**

(54) **Procédé d'oxycombustion d'un combustible liquide**

(57)     L'invention concerne un procédé de combustion d'un combustible liquide au moyen d'un gaz oxygéné dans une zone de combustion applicable aux chaudières à vapeur produisant une flamme oxygène plus longue, plus homogène et moins chaude qu'une flamme oxygène conventionnelle. Selon l'invention, le combustible liquide est injecté dans la zone de combustion sous forme atomisée, l'atomisation du combustible étant obtenue par mise en contact d'un flux du combustible avec un flux de fluide d'atomisation, et :

-   préalablement à son atomisation, le combustible liquide présente une viscosité d'au moins $30.10^{-6}$ $m^2/s$,

-   la mise en contact du flux de combustible avec le flux de fluide d'atomisation n'est réalisée que dans la zone de combustion, et

-   le gaz oxygéné est injecté de manière étagée dans la zone de combustion.

EP 1 684 012 A1

**Description**

La présente invention concerne un procédé de combustion d'un combustible liquide de grande viscosité au moyen d'un gaz oxygéné, notamment utilisable dans une chaudière à vapeur.

Les chaudières à vapeur peuvent utiliser différents types de combustibles : des combustibles gazeux (gaz naturel), liquides (les fiouls lourds) ou solides (charbon pulvérisé). Le comburant utilisé est par contre actuellement systématiquement de l'air.

Bien qu'il soit largement connu d'utiliser l'oxygène pur ou concentré dans la combustion de tout type de combustibles dans de nombreuses industries (verre, métallurgie, ...), celui-ci n'est pas du tout utilisé dans le domaine de la production d'énergie à l'aide des chaudières à vapeur pour deux raisons principales : d'une part, pour une raison économique (coût du comburant oxygène), d'autre part, pour une raison technique qui est le problème de transfert de chaleur entre la flamme oxygène et la vapeur. Toutefois, ce type de combustion à l'oxygène devient économiquement attractive car elle permet de capturer facilement, et à un coût modéré, le $CO_2$ contenu dans les fumées, ce qui est un objectif majeur dans le contexte environnemental. Ce problème de transfert tient à ce qu'en l'absence du ballast azote présente dans l'air, la flamme obtenue par la combustion du combustible et d'oxygène est plus courte et plus chaude qu'une flamme obtenue par la combustion du combustible et d'air. La zone de transfert thermique est plus restreinte et les flux thermiques locaux peuvent atteindre des valeurs de 600 à 1000 kW/m$^2$ ce qui implique des températures de tubes plus élevées et donc des problèmes de matériaux (corrosion).

Pour contourner ce problème de flux locaux élevés, la solution généralement retenue est le recyclage des fumées : cette solution permet de remplacer l'azote de l'air par un fort volume de fumées recyclées qui redonne à la flamme des caractéristiques proches de celles d'une flamme air. Bien évidemment cette solution n'est pas optimisée car cette recirculation de fumées implique l'ajout d'un circuit supplémentaire et d'une soufflante. Elle peut également poser des problèmes d'érosion et de corrosion.

D'autre part, dans le contexte actuel de l'exploitation des champs de pétrole, l'utilisation de combustibles liquides et notamment de combustibles liquides de viscosité élevée (dits résidus lourds) devient de plus en plus fréquente pour la combustion des chaudières.

Le but de la présente invention est de proposer un procédé de combustion à l'oxygène de combustibles liquides, de viscosité élevée, utilisable dans les chaudières à vapeur produisant une flamme oxygène plus longue, plus homogène et moins chaude qu'une flamme oxygène conventionnelle.

Un autre but de la présente invention est de proposer un procédé de combustion à l'oxygène de combustibles liquides, de viscosité élevée, permettant d'éviter la recirculation de fumées tout en utilisant des matériaux conventionnels.

Dans ce but, l'invention concerne un procédé de combustion d'un combustible liquide au moyen d'un gaz oxygéné dans une zone de combustion, dans lequel le combustible liquide est injecté dans la zone de combustion sous forme atomisée, l'atomisation du combustible étant obtenue par mise en contact d'un flux du combustible avec un flux de fluide d'atomisation, et dans lequel :

- préalablement à son atomisation, le combustible liquide présente une viscosité d'au moins 30.10$^{-6}$ m$^2$/s,
- la mise en contact du flux de combustible avec le flux de fluide d'atomisation n'est réalisée que dans la zone de combustion, et
- le gaz oxygéné est injecté dans la zone de combustion sous forme d'au moins deux jets :

  • au moins un premier jet, dit jet d'oxydant primaire, injecté à proximité du combustible liquide atomisé de manière à engendrer une première combustion incomplète, les produits issus de cette première combustion comportant encore au moins une partie du combustible,
  • au moins un deuxième jet, dit jet d'oxydant secondaire, injecté à une distance $l_2$ du combustible atomisé qui est supérieure à la distance $l_1$ entre le combustible atomisé et le jet d'oxydant primaire, de manière à entrer en combustion avec la partie du combustible présent dans les produits issus de la première combustion.

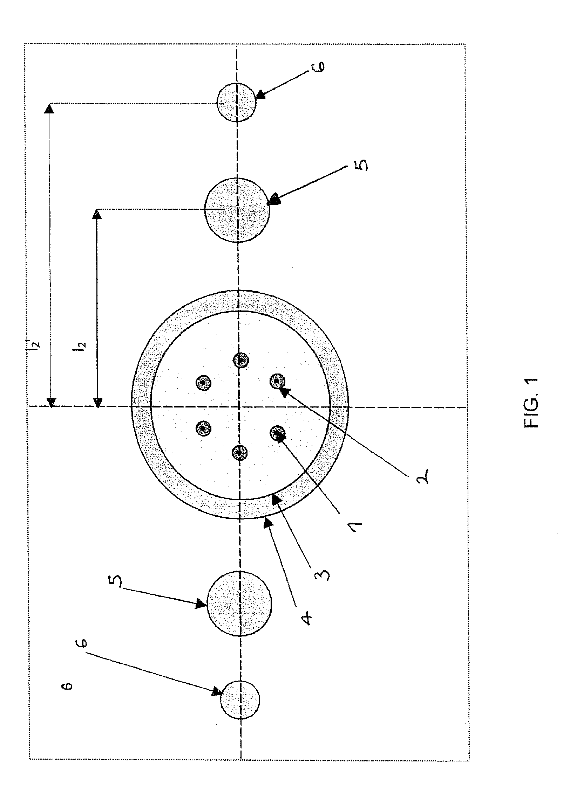

D'autres caractéristiques et avantages de l'invention apparaîtront à la lecture de la description qui va suivre. Un mode de réalisation de l'invention est donné à titre d'exemple non limitatif, illustré par la figure 1 qui est une vue schématique d'un brûleur permettant de mettre en oeuvre le procédé selon l'invention.

L'invention concerne donc un procédé de combustion d'un combustible liquide au moyen d'un gaz oxygéné dans une zone de combustion, dans lequel le combustible liquide est injecté dans la zone de combustion sous forme atomisée, l'atomisation du combustible étant obtenue par mise en contact d'un flux du combustible avec un flux de fluide d'atomisation, et dans lequel :

- préalablement à son atomisation, le combustible liquide présente une viscosité d'au moins 30.10$^{-6}$ m$^2$/s,
- la mise en contact du flux de combustible avec le flux de fluide d'atomisation n'est réalisée que dans la zone de combustion, et
- le gaz oxygéné est injecté dans la zone de combustion sous forme d'au moins deux jets :

  • au moins un premier jet, dit jet d'oxydant primaire, injecté à proximité du combustible liquide atomisé de manière à engendrer une première combustion incomplète, les produits issus de cette première combustion comportant encore au moins une partie du combustible,

- au moins un deuxième jet, dit jet d'oxydant secondaire, injecté à une distance $l_2$ du combustible atomisé qui est supérieure à la distance $l_1$ entre le combustible atomisé et le jet d'oxydant primaire, de manière à entrer en combustion avec la partie du combustible présent dans les produits issus de la première combustion.

L'invention concerne la combustion des combustibles de viscosité élevée, dits résidus lourds. A température ambiante, ces fluides sont solides ou presque, chauffés à 100°C, ils présentent une viscosité d'au moins $80.10^{-6}$ $m^2/s$, de préférence d'au moins $400.10^{-6}$ $m^2/s$, encore plus préférentiellement d'au moins $2000.10^{-6}$ $m^2/s$. Ils doivent souvent être chauffés pour présenter une viscosité permettant leurs injection dans un brûleur.

Selon le procédé de l'invention, la combustion met en oeuvre un combustible liquide, qui doit être atomisé préalablement à son introduction dans la zone de combustion. La technique d'atomisation des combustibles liquides est bien connue de l'art antérieur et consiste à mettre en contact un flux du combustible avec un flux de fluide d'atomisation. Ce fluide d'atomisation peut être choisi parmi les fluides suivants : vapeur, air, oxygène. De préférence, il s'agit de vapeur d'eau. Une première caractéristique essentielle du procédé de l'invention est que le combustible liquide doit, préalablement à mise en contact avec le fluide d'atomisation, présenter une viscosité d'au moins $30.10^{-6}$ $m^2/s$, de préférence d'au moins $50.10^{-6}$ $m^2/s$, encore plus préférentiellement d'au moins $80.10^{-6}$ $m^2/s$. Le combustible liquide étant généralement solide à température ambiante, il est préférable de le chauffer afin de le liquéfier. Cette liquéfaction est habituellement réalisée dans un circuit en boucle contenant le combustible continuellement chauffé. Le combustible chauffé est ensuite prélevé sur la boucle pour son utilisation dans le procédé selon l'invention. La température de la boucle de chauffage est ajustée de manière à ce que la viscosité désirée (au moins $30.10^{-6}$ $m^2/s$) pour le procédé soit atteinte. Cette viscosité minimale du combustible liquide au moment de son atomisation garantit l'obtention d'un profil de gouttelettes particulier. Ce profil particulier combiné aux autres caractéristiques du procédé produit une flamme oxygène moins chaude, plus longue, plus homogène que dans l'art antérieur. Selon le mode préféré, le combustible présente une viscosité comprise entre $80.10^{-6}$ $m^2/s$ et $200.10^{-6}$ $m^2/s$. De manière à ce que le combustible liquide reste injectable, il est préférable que sa viscosité soit d'au plus $200. 10^{-6}$ $m^2/s$. Une deuxième caractéristique essentielle du procédé de l'invention est que la mise en contact du flux de combustible avec le flux de fluide d'atomisation ne doit être réalisée que dans la zone de combustion. Ainsi, il est important d'éviter un prémélange du combustible et du fluide d'atomisation avant leur injection dans la zone de combustion. Les étapes de mise en contact du combustible et du fluide d'atomisation et d'atomisation doivent avoir lieu dans la zone de combustion, ladite zone s'entend comme le lieu dans lequel se développe la flamme de la combustion. Une mise en oeuvre permettant d'obtenir cet absence de prémélange consiste à délivrer le combustible liquide et le fluide d'atomisation au moyen de deux tubes coaxiaux, le tube intérieur permettant de délivrer le combustible liquide et le tube extérieur permettant de délivrer le fluide d'atomisation. De préférence, les extrémités de ces deux tubes débouchant dans la zone de combustion sont placées sensiblement dans le même plan perpendiculaire à leur axe central.

Selon un mode préféré, le flux de fluide d'atomisation présente un débit inférieur à 15 % en poids au débit du flux de combustible, de préférence inférieur à 10 %.

La troisième caractéristique essentielle de l'invention tient à l'injection du gaz oxygéné. Ce dernier doit être injecté dans la zone de combustion de manière dite étagée. Ainsi, le gaz oxygéné est divisé en plusieurs jets injectés à différents endroits de la chambre de combustion. Un premier jet primaire est injecté à proximité du combustible liquide atomisé. Par "à proximité", on entend le fait que ce jet primaire est le plus proche du combustible liquide. Il peut être injecté à une distance nulle ou non du lieu d'injection du combustible atomisé. Ce jet primaire permet d'engendrer une première combustion incomplète. Cette combustion incomplète est due à l'injection d'une quantité sous-stoechiométrique de l'oxygène primaire par rapport à la quantité de combustible injectée. Les produits issus de cette première combustion comportent par conséquent encore au moins une partie du combustible. Le procédé selon l'invention peut mettre en oeuvre plusieurs jets d'oxydants primaires ; tous ces jets primaires étant injectés à la même distance du combustible liquide atomisé. Dans cette dernière mise en oeuvre, les jets primaires sont de préférence répartis régulièrement autour du combustible atomisé.

Un deuxième jet dit secondaire est injecté à une distance $l_2$ plus grande que le jet primaire du combustible liquide atomisé. Ce jet secondaire permet d'achever la combustion du combustible restant dans les produits de la première combustion avec le jet primaire. La quantité de gaz oxygéné secondaire injectée correspond donc au complément au gaz oxygéné primaire injecté de manière à obtenir une injection totale de gaz oxygéné stoechiométrique par rapport à la quantité de combustible injectée. Le procédé selon l'invention peut mettre en oeuvre plusieurs jets d'oxydants secondaires, injectés à égale distance du lieu d'injection du combustible atomisé ou à des distances différentes. Les jets d'oxydants secondaires, injectés à égale distance du lieu d'injection du combustible sont de préférence répartis régulièrement autour du combustible atomisé. De préférence, la quantité d'oxygène injecté dans la zone de combustion par le jet d'oxydant primaire représente au plus 30 % de la quantité totale d'oxygène injectée dans la zone de combustion, de préférence au plus 15 %.

Selon l'invention, on entend par gaz oxygéné, un gaz comprenant au moins 80 % en volume d'oxygène. De préférence, le gaz oxygéné mis en oeuvre dans le procédé présente une concentration en oxygène d'au moins 95 % en volume.

Les différentes caractéristiques du procédé selon l'invention, et notamment le respect d'une viscosité supérieure à $30.10^{-6}$ $m^2$/s pour le combustible liquide, conduit à la combustion étagée d'un fluide atomisé dont la dispersion de gouttes présente les caractéristiques suivantes :

- la taille de goutte moyenne est supérieure à 100 $\mu$m, de préférence comprise entre 150 et 300 $\mu$m, et
- la dispersion du diamètre des gouttes de la dispersion suit la loi de Rosin Rammler. La fonction de distribution f(D) d'une dispersion (représentant en un point donné de l'espace le nombre probable de gouttes dont le diamètre est supérieur à D) selon la loi de Rosin Rammler est définie par la formule la suivante :

$$f(D) = \exp(-(\frac{D}{\overline{D}})^n)$$

où $\overline{D}$ est le diamètre moyen (on considère généralement le diamètre moyen de Sauter), et n le paramètre de diffusion.

Cette combinaison produit une flamme oxygène plus longue, plus homogène et moins chaude qu'une flamme oxygène de l'art antérieur. Elle permet d'obtenir une courbe de flux thermique très plate et donc d'éviter la recirculation de fumées tout en utilisant des matériaux conventionnels.

Le procédé selon l'invention permet également de réduire la consommation de fluide d'atomisation (jusqu'à - 50%).

Enfin, le procédé selon l'invention présente l'avantage de permettre l'injection du combustible à une température plus basse que dans l'art antérieur.

Le procédé selon l'invention est particulièrement adapté à une mise en oeuvre dans une chaudière à vapeur.

La figure 1 illustre un type de brûleur permettant de mettre en oeuvre le procédé selon l'invention. L'injecteur de combustible liquide atomisé de ce brûleur comporte une tête de pulvérisation 3 de forme cylindrique dans laquelle sont ménagées six buses cylindriques d'injection du combustible 1 placées chacune coaxialement dans une buse cylindrique d'injection de fluide d'atomisation 2. Toutes les buses débouchent sur la surface avant de la tête de pulvérisation 3 dans la zone de combustion. La périphérie de la surface avant sur laquelle débouchent les buses 1, 2 est tronconique et les buses 1, 2 débouchent perpendiculairement à cette surface. Il n'y a donc aucun prémélange du combustible et du fluide d'atomisation. Les six orifices sont fixés à égale distance du centre de la tête de pulvérisation 3 et à égale distance les unes des autres. Les buses sont prolongées vers l'arrière par des conduits destinés à acheminer le combustible liquide et le fluide d'atomisation jusqu'aux buses 1, 2. Le brûleur comporte également trois types injecteurs d'oxygène :

- un injecteur d'oxygène primaire constitué d'un tube 4 de diamètre supérieur au diamètre de la tête de pulvérisation 3 et placé coaxialement autour de cette tête,
- deux injecteurs d'oxygène secondaire 5 placés à une première distance $l_2$ du centre de la tête de pulvérisation 3, de part et d'autre de ladite tête,
- deux autres injecteurs d'oxygène secondaire 6 placés à une deuxième distance $l_{2'}$ ($>l_2$) du centre de la tête de pulvérisation 3, de part et d'autre de ladite tête.

**EXEMPLE**

L'injecteur de la figure 1 est mis en oeuvre pour la combustion d'un combustible liquide présentant les caractéristiques suivantes :

- nature du combustible : fioul lourd liquide,
- viscosité : $40.10^{-6}$ $m^2$/s à 100˚C.

Après chauffage à 90 ˚C pour obtenir une viscosité de $50.10^{-6}$ $m^2$/s, le combustible est injecté avec un débit de 179 kg/h et une vitesse d'injection de 40 m/s. Le fluide d'atomisation est de la vapeur d'eau présentant une vitesse d'injection de 200 m/s et un débit d'injection représentant 6 % en poids du débit de combustible, soit 10,74 kg/h.

Le gaz oxygéné utilisé pour la combustion présente une concentration en oxygène supérieure à 99 % en volume. Le gaz oxygéné est injecté avec un débit global de 405 $Nm^3$/h et la répartition entre les différents injecteurs est la suivante :

- 5 % dans l'injecteur primaire 4,
- 33 % dans les injecteurs secondaires 5,
- 62 % dans les injecteurs secondaires 6.

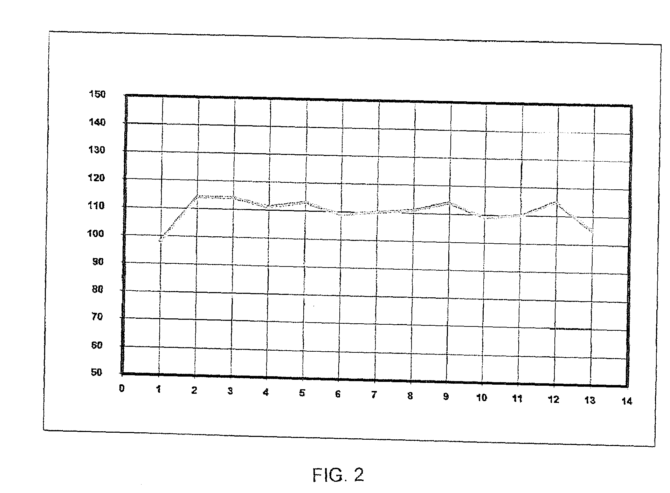

La courbe de la figure 2 représente le flux thermique (kW/$m^2$) obtenu par la mise en oeuvre de ce procédé de combustion par rapport à la distance au nez de l'injecteur (1 unité d'abscisse représentant 0,6 mètre). En abscisse, chaque unité de 0,6 mètre correspond à une bouillotte, ou échangeur de chaleur, de la chaudière. On observe que le transfert de chaleur est homogène quelle que soit la distance au nez du brûleur.

## Revendications

**1.** Procédé de combustion d'un combustible liquide au moyen d'un gaz oxygéné dans une zone de combustion, dans lequel le combustible liquide est injecté dans la zone de combustion sous forme atomisée, l'atomisation du combustible étant obtenue par mise en contact d'un flux du combustible avec un flux de fluide d'atomisation, **caractérisé en ce que** :

- préalablement à son atomisation, le combustible liquide présente une viscosité d'au moins $30.10^{-6}$ m$^2$/s,
- la mise en contact du flux de combustible avec le flux de fluide d'atomisation n'est réalisée que dans la zone de combustion, et
- le gaz oxygéné est injecté dans la zone de combustion sous forme d'au moins deux jets :

. au moins un premier jet, dit jet d'oxydant primaire, injecté à proximité du combustible liquide atomisé de manière à engendrer une première combustion incomplète, les produits issus de cette première combustion comportant encore au moins une partie du combustible,
. au moins un deuxième jet, dit jet d'oxydant secondaire, injecté à une distance $l_2$ du combustible atomisé qui est supérieure à la distance $l_1$ entre le combustible atomisé et le jet d'oxydant primaire, de manière à entrer en combustion avec la partie du combustible présent dans les produits issus de la première combustion.

**2.** Procédé selon la revendication 1, **caractérisé en ce que**, préalablement à son atomisation, le combustible liquide présente une viscosité d'au moins $50.10^{-6}$ m$^2$/s.

**3.** Procédé selon la revendication 1 ou 2, **caractérisé en ce que**, préalablement à son atomisation, le combustible liquide présente une viscosité d'au moins $80.10^{-6}$ m$^2$/s.

**4.** Procédé selon l'une des revendications précédentes, **caractérisé en ce que** le fluide d'atomisation est de la vapeur d'eau.

**5.** Procédé selon l'une des revendications précédentes, **caractérisé en ce que** le combustible liquide et le fluide d'atomisation sont délivrés au moyen de deux tubes coaxiaux, le tube intérieur permettant de délivrer le combustible liquide et le tube extérieur permettant de délivrer le fluide d'atomisation.

**6.** Procédé selon l'une des revendications précédentes, **caractérisé en ce que** le flux de fluide d'atomisation présente un débit inférieur à 15 % en poids au débit du flux de combustible, de préférence inférieur à 10 %.

**7.** Procédé selon l'une des revendications précédentes, **caractérisé en ce que** la quantité d'oxygène injecté dans la zone de combustion par le jet d'oxydant primaire représente au plus 30 % de la quantité totale d'oxygène injectée dans la zone de combustion, de préférence au plus 15 %.

**8.** Procédé selon l'une des revendications précédentes, **caractérisé en ce que** le gaz oxygéné présente une concentration en oxygène d'au moins 80 % en volume.

**9.** Procédé selon l'une des revendications précédentes, **caractérisé en ce qu'**il est mis en oeuvre dans une chaudière à vapeur.

FIG. 1

FIG. 2

Office européen
des brevets

**RAPPORT DE RECHERCHE EUROPEENNE**

Numéro de la demande

EP 05 30 1097

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 853 953 A (L'AIR LIQUIDE SOCIETE ANONYME POUR L'ETUDE ET L'EXPLOITATION DES PROCE) 22 octobre 2004 (2004-10-22) | 1,4-8 | F23D11/10 |
| Y | * page 1, ligne 1 - ligne 9 *<br>* page 3, ligne 35 - page 4, ligne 4 *<br>* page 4, ligne 30 - page 7, ligne 31 *<br>* revendications 1-4,9,12; figures 1,2 *<br>----- | 2,3 | |
| Y | US 5 683 549 A (STIGSSON ET AL)<br>4 novembre 1997 (1997-11-04)<br>* colonne 1, ligne 12 - ligne 25 *<br>* colonne 1, ligne 65 - colonne 2, ligne 24 *<br>* colonne 3, ligne 51 - colonne 4, ligne 21; figures 1,2 *<br>----- | 2,3 | |
| A | US 2004/157178 A1 (DUGUE JACQUES ET AL)<br>12 août 2004 (2004-08-12)<br>* page 3, alinéa 55 *<br>* page 4, alinéa 70 - alinéa 75 *<br>* page 5, alinéa 80 - alinéa 83 *<br>* figures 3a,3b,5,6 *<br>----- | 1 | |
| | | | **DOMAINES TECHNIQUES RECHERCHES** (IPC)<br><br>F23D |
| A | US 5 617 997 A (KOBAYASHI ET AL)<br>8 avril 1997 (1997-04-08)<br>* colonne 6, ligne 27 - ligne 43; revendication 12; figure 2 *<br>----- | 2,3 | |

Le présent rapport a été établi pour toutes les revendications

| Lieu de la recherche | Date d'achèvement de la recherche | Examinateur |
|---|---|---|
| Munich | 1 mars 2006 | Gavriliu, C |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 30 1097

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-03-2006

| Document brevet cité au rapport de recherche | | Date de publication | Membre(s) de la famille de brevet(s) | | Date de publication |
|---|---|---|---|---|---|
| FR 2853953 | A | 22-10-2004 | EP | 1618334 A1 | 25-01-2006 |
| | | | WO | 2004094902 A1 | 04-11-2004 |
| US 5683549 | A | 04-11-1997 | AUCUN | | |
| US 2004157178 | A1 | 12-08-2004 | BR | 0208586 A | 23-03-2004 |
| | | | CA | 2443407 A1 | 17-10-2002 |
| | | | CN | 1507549 A | 23-06-2004 |
| | | | EP | 1379810 A1 | 14-01-2004 |
| | | | FR | 2823290 A1 | 11-10-2002 |
| | | | WO | 02081967 A1 | 17-10-2002 |
| | | | JP | 2004523721 T | 05-08-2004 |
| | | | PL | 365945 A1 | 24-01-2005 |
| US 5617997 | A | 08-04-1997 | BR | 9502777 A | 23-04-1996 |
| | | | CA | 2151541 A1 | 14-12-1995 |
| | | | CN | 1121571 A | 01-05-1996 |
| | | | DE | 69519197 D1 | 30-11-2000 |
| | | | DE | 69519197 T2 | 17-05-2001 |
| | | | EP | 0687858 A1 | 20-12-1995 |
| | | | ES | 2151007 T3 | 16-12-2000 |
| | | | JP | 2939155 B2 | 25-08-1999 |
| | | | JP | 8005018 A | 12-01-1996 |
| | | | KR | 234572 B1 | 15-12-1999 |
| | | | PT | 687858 T | 31-01-2001 |

EPO FORM P0460

Pour tout renseignement concernant cette annexe : voir Journal Officiel de l'Office européen des brevets, No.12/82